(19) Europäisches Patentamt
European Patent Office
Office européen des brevets

(11) Publication number: 0 215 713 B1

(12) EUROPEAN PATENT SPECIFICATION

(45) Date of publication of patent specification: 23.01.91

(51) Int. Cl.5: G 02 B 6/26, G 02 B 6/42

(21) Application number: 86401990.6

(22) Date of filing: 11.09.86

# (54) Optical fiber having elliptical lens and method of producing the same.

(30) Priority: 12.09.85 JP 202453/85

(43) Date of publication of application: 25.03.87 Bulletin 87/13

(45) Publication of the grant of the patent: 23.01.91 Bulletin 91/04

(84) Designated Contracting States: DE FR GB

(56) References cited:
DE-A-3 134 508
DE-A-3 207 988
FR-A-2 274 053
US-A-3 910 677

PATENT ABSTRACTS OF JAPAN, vol. 9, no. 323 (P-414)2046r, 18th December 1985; & JP-A-60 150 011

PATENT ABSTRACTS OF JAPAN, vol. 4, no. 18 (E-171), 13th February 1980, page 38 E 171; & JP-A-54 157 633

(73) Proprietor: DAIICHI DENSHI KOGYO KABUSHIKI KAISHA
7-12, Yoyogi 2-chome Shibuya-ku
Tokyo (JP)

(72) Inventor: Hirose, Takao
619-117, Yasuzuka Mibu-Machi
Shimotsuga-Gun Tochigi Pref. (JP)
Inventor: Matsumura, Yoshiyasu
29-6, Yagiyama-Hon-Cho 2-Chome
Sendai City Miyagi Pref. (JP)

(74) Representative: Phélip, Bruno et al
c/o Cabinet Harlé & Phélip 21, rue de La Rochefoucauld
F-75009 Paris (FR)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 215 713 B1

Courier Press, Leamington Spa, England.

## Description

This invention relates to an optical fiber formed on its end with an elliptical lens and a method of producing the same.

In order to couple an output light beam from a laser diode into an optical fiber, it has been proposed that the end of an optical fiber is heated and softened to form a hemispherical lens through with the light beam can be coupled.

However the light emission of the laser diode is such that, the vertical transverse mode usually has a wider spread angle than that of the horizontal transverse mode, so that the light emission pattern is elliptical.

As can be seen from the above, an important problem to be solved is that the output of the laser diode is effectively coupled into an optical fiber. In order to solve this problem, the use of laser diodes whose light emission patterns are circular has been studied. However, such laser diodes do not solve the problem completely. Furthermore, a method of optically assisting the coupling of the output of a laser diode into an optical fiber with the aid of a combination of cylindrical lenses has also been investigated. However, it is difficult to apply this method to communication circuits due to the shape and the alignment requirements of cylindrical lenses.

It is a principal object of the invention to provide an optical fiber having an elliptical lens and a method of producing the same which eliminate all the disadvantages of the prior art.

In order to achieve this object, the optical fiber comprises a main fiber and two contiguous fiber stubs respectively positioned on diametrically opposite sides of the main fiber and extending substantially parallel with said main fiber, the optical fiber having an elliptical lens formed from the fused ends of said main fiber and said fiber stubs.

The method of the invention comprises steps of arranging two stubs on diametrically opposite sides of the fiber so as to be contiguous with and substantially parallel with the optical fiber and heating and fusing ends of the optical fiber and the fiber stubs to form the elliptical lens from the adjacent fused portions coalescing under the influence of surface tension.

In a preferred embodiment, the ends of the optical fiber and the fiber stubs are heated by electrical discharge or by a micro-torch.

The fiber stubs are preferably selected so as to have a greater surface tension than the optical fiber during fusion.

The ratio of diameter of the fiber stubs to the diameter of the optical fiber is preferably selected to achieve a predetermined curvature of the elliptical lens.

When the optical fiber and the two fiber stubs are softened and fused together, the optical fiber is subjected on both sides to tensile forces owing to surface tension acting between the fused portions to form an elliptical lens. Hence, even if the output of the laser diode exhibits an elliptical light emission pattern, the output can be effectively coupled into the optical fiber.

In order that the invention may be more clearly understood, preferred embodiments will be described, by way of example, with reference to the accompanying drawings.

Figs. 1a, 1b and 1c illustrate an optical fiber having an elliptical lens according to the invention;

Figs. 2a is a perspective view of an optical fiber for explaining the method of producing the fiber having an elliptical lens; and

Fig. 2b is a side view of the optical fiber shown in Fig. 2a.

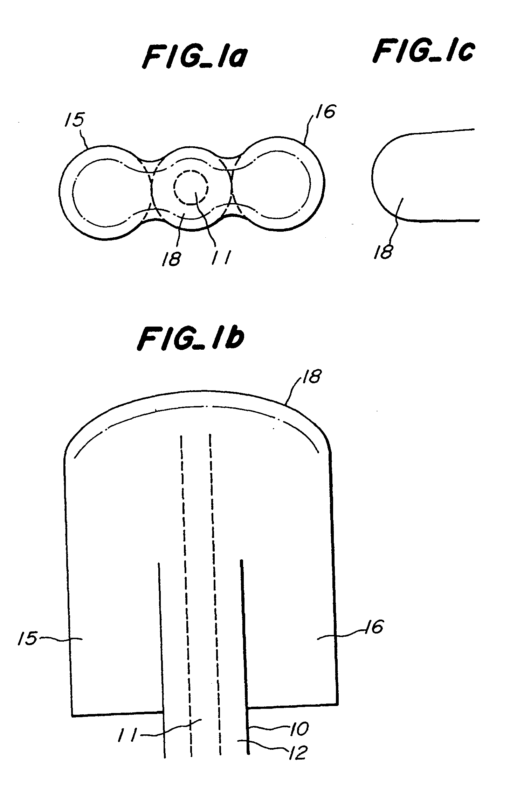

Figs. 1a, 1b and 1c illustrate an optical fiber, formed on its end with an elliptical lens according to the invention, in a front, plan and side view, respectively.

The optical fiber 10 comprises a core 11 and cladding 12 and fiber stubs 15 and 16. The front ends of the fiber stubs 15 and 16 are integrally fused with the front end of the optical fiber 10 to form the elliptical lens.

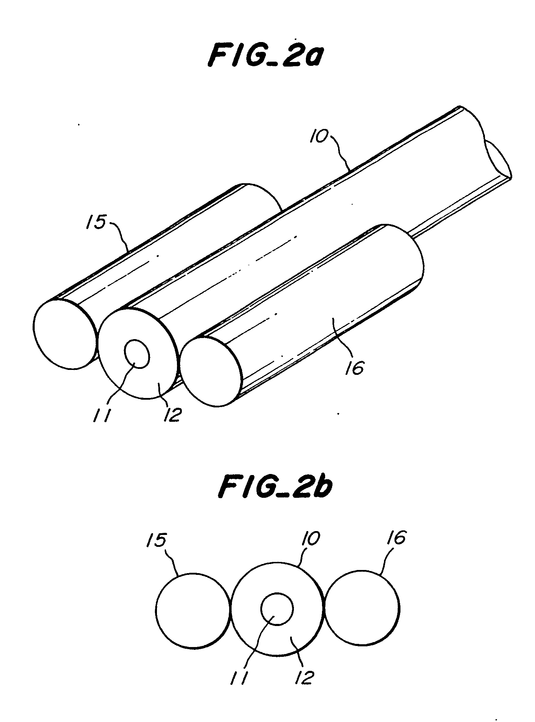

Figs. 2a and 2b illustrate in a perspective and front view a method of producing the optical fiber having the elliptical lens shown in Figs. 1a-1c. The fiber pieces 15 and 16 are arranged one either side of the front end of the optical fiber 10.

The front ends of the optical fiber 10 and the fiber pieces 15 and 16 are heated by electrical discharge, micro-torch or the like to be sufficiently softened or fused. In this case, it is of course preferable to select fiber pieces 15 and 16 which are of superior surface tension to that of the optical fiber 10 during fusion.

Upon heating and fusing the front ends of the optical fiber and fiber stubs, the fiber stubs 15 and 16 are melted adjacent the front end of the optical fiber 10, so both sides of the optical fiber 10 are subjected to tensile forces due to the surface tension of the fused fiber stubs thereby forming an elliptical lens at the front end of the optical fiber as shown in Figs. 1a-1c.

The curvature of the elliptical lens is determined in accordance with the ratio of the diameter of the two fiber pieces 15 and 16 to the diameter of the optical fiber 10.

Although the optical fiber 10 is a step index fiber, this is only by way of example, and it is clear a graded index optical fiber can bring about the same effect as that in the above embodiment.

It should be understood that the fiber pieces may be removed after the elliptical lens has been formed.

As can be seen from the above explanation, the optical fiber produced by the method according to the invention comprises the elliptical lens at its end which is very small and convenient in use with high efficiency in collecting light beams, thereby improving the transmission over long distances and the signal to noise ratio. Accordingly, the invention has great effects in the industrial field.

It is further understood by those skilled in the art that the foregoing description is that of preferred embodiments of the disclosed fibers and that various changes and modifications may be made in the invention without departing from the scope of the invention as defined in the claims.

**Claims**

1. An optical fiber comprising a main fiber (10) and two contiguous fiber stubs (15, 16) respectively positioned on diametrically opposite sides of the main fiber (10) and extending substantially parallel with said main fiber (10), the optical fiber having an elliptical lens formed from the fused ends of said main fiber and said fiber stubs (15, 16).

2. A method of producing an optical fiber having an elliptical lens comprising the steps of arranging two stubs (15, 16) on diametrically opposite sides of the fiber so as to be contiguous with and substantially parallel with the optical fiber (10), and heating and fusing ends of the optical fiber (10) and the fiber stubs (15, 16) to form the elliptical lens from the adjacent fused portions coalescing under the influence of surface tension.

3. A method as set forth in claim 2, wherein the ends of the optical fiber (10) and the fiber stubs (15, 16) are heated by electrical discharge.

4. A method as set forth in claim 2, wherein the ends of the optical fiber (10) and the fiber stubs (15, 16) are heated by a micro-torch.

5. A method as set forth in claim 2, wherein the fiber stubs (15, 16) have a greater surface tension than the optical fiber (10) during fusion.

6. A method as set forth in claim 2, wherein the ratio of diameter of the fiber stubs (15, 16) to the diameter of the optical fiber (10) is selected to achieve a predetermined curvature of the elliptical lens.

**Patentansprüche**

1. Optische Faser, umfassend eine Hauptfaser (10) und zwei an dieser anliegende Faserstümpfe (15, 16), die jeweils auf diametral gegenüberliegenden Seiten der Hauptfaser (10) angeordnet sind und im wesentlichen parallel zu der Hauptfaser (10) verlaufen, wobei die optische Faser eine elliptische Linse besitzt, die aus den verschweißten Enden der Hauptfaser und der Faserstümpfe (15, 16) gebildet ist.

2. Verfahren zur Herstellung einer optischen Faser mit einer elliptischen Linse, umfassend die Schritte des Anordnens zweier Stümpfe (15, 16) auf diametral gegenüberliegenden Seiten der Faser, so daß sie an der optischen Faser (10) anliegen und im wesentlichen parallel zu dieser verlaufen, und des Erhitzens und Verschweißens der Enden der optischen Faser (10) und der Faserstümpfe (15, 16), wodurch eine elliptische Linse aus den benachbarten verschweißten Teilen gebildet wird, die unter dem Einfluß der Oberflächenspannung koaleszieren.

3. Verfahren nach Anspruch 2, worin die Enden der optischen Faser (10) und der Faserstümpfe (15, 16) mittels einer elektrischen Entladung erhitzt werden.

4. Verfahren nach Anspruch 2, worin die Enden der optischen Faser (10) und der Faserstümpfe (15, 16) mittels eines Mikrobrenners erhitzt werden.

5. Verfahren nach Anspruch 2, worin die Enden der Faserstümpfe (15, 16) während des Verschweißens eine größere Oberflächenspannung als die optische Faser haben.

6. Verfahren nach Anspruch 2, worin das Verhältnis des Durchmessers der Faserstümpfe (15, 16) zu dem Durchmesser der optischen Faser (10) so gewählt wird, daß eine vorher festgelegte Krümmung der elliptischen Linse erzielt wird.

**Revendications**

1. Fibre optique comprenant une fibre principale (10) et deux tronçons de fibres contigus (15, 16) respectivement positionnés sur des côtés diamétralement opposés de la fibre principale (10) et s'étendant sensiblement en parallèle à ladite fibre principale (10), la fibre optique comportant une lentille elliptique formée par les extrémités fondues de ladite fibre principale et desdits tronçons de fibres (15, 16).

2. Procédé de production d'une fibre optique possédant une lentille elliptique comprenant les étapes consistant à disposer deux tronçons de fibres (15, 16) sur des côtés diamétralement opposés de la fibre pour qu'ils soient contigus et sensiblement parallèles à la fibre optique (10), et à chauffer et fondre des extrémités de la fibre optique (10) et des tronçons de fibres (15, 16) pour former la lentille elliptique à partir des parties adjacentes fondues en coalescence sous l'influence de la tension superficielle.

3. Procédé selon la revendication 2 dans lequel les extrémités de la fibre optique (10) et des tronçons de fibres (15, 16) sont chauffées par décharge électrique.

4. Procédé selon la revendication 2, dans lequel les extrémités de la fibre optique (10) et des tronçons de fibres (15, 16) sont chauffées par une micro-torche.

5. Procédé selon la revendication 2 dans lequel les tronçons de fibres (15, 16) présentent, pendant la fusion, une tension superficielle supérieure à celle de la fibre optique (10).

6. Procédé selon la revendication 2 dans lequel le rapport entre le diamétre des tronçons de fibres (15, 16) et le diamètre de la fibre optique (10) est choisi pour obtenir une courbure prédéterminée de la lentille elliptique.

FIG_1a
FIG_1c

15
16
18
11
18

FIG_1b

18
15
16
11
10
12

FIG_2a

10
15
16
11
12

FIG_2b

15
10
16
11
12